Europäisches Patentamt

European Patent Office

Office européen des brevets

(11) Veröffentlichungsnummer: **0 397 953**
**A1**

## (12) EUROPÄISCHE PATENTANMELDUNG

(21) Anmeldenummer: **89810653.9**

(22) Anmeldetag: **01.09.89**

(51) Int. Cl.5: **C02F 11/18, C02F 11/12**

(30) Priorität: **16.05.89 CH 1810/89**

(43) Veröffentlichungstag der Anmeldung:
**22.11.90 Patentblatt 90/47**

(84) Benannte Vertragsstaaten:
**AT BE CH DE ES FR GB IT LI NL SE**

(71) Anmelder: **P B I PLANUNGS-BERATUNGS &
INGENIEUR AG
Zentrum Trotte Centralstrasse 14 a
CH-6210 Sursee(CH)**

(72) Erfinder: **Disler, Franz
Schlottermilch 2 A
CH-6210 Sursee(CH)**

(74) Vertreter: **Arato, Laszlo
Seebuchtstrasse 19
CH-6374 Buochs(CH)**

(54) **Verfahren zur Schlammentwässerung.**

(57) Damit das Eindicken und Trocknen von Schlämmen aus häuslichen, landwirtschaftlichen und industriellen Abwässern mit hoher wirtschaftlichkeit und
ohne Zusatz von Chemikalien gelingt und der anfallende Wasseranteil direkt in den Vorfluter geleitet
werden kann, wird zu Beginn des Verfahrens der
Schlamm unter Einwirkung von Druck und Hitze entgast (4) und die Vortrocknung (8) bis Nassaustrag
(ca.65 %TS) vorgenommen.

Fig.1

EP 0 397 953 A1

## Verfahren zur Schlammentwässerung

Verfahren zur Schlammentwässerung für das Eindicken und Trocknen von Schlämmen aus häuslichen, landwirtschaftlichen und industriellen Abwässern, gemäss den kennzeichnenden Merkmalen des Anspruchs 1.

Die Entsorgung von Schlämmen ist eine der vordringlichsten Aufgaben der Zivilisation geworden. Schlämme der genannten Art sind wässrige Suspensionen mit nur 6 - 8 % Trockensubstanz, wovon 2/3 für Pflanzen wiederverwertbar sind. Sie entstehen in riesen Mengen als Ueberschussschlamm des Belebtschlammverfahrens der Abwasserreinigung, als Fäkalien der Tierzucht, und als Abfall der Industrie. Die Orte des Düngermangels liegen von der Schlammanfallstellen meist weit entfernt. Daher hat die rationelle Schlammentwässerung, mit dem Ziel den Schlamm bis zu einem sterilen geruchlosen und krümeligen Masse zu trocknen und in dieser Konsistenz als Dünger dem Markt anzubieten, grosse Bedeutung für die oekologische Volkswirtschaft.

Für die Schlammentwässerung sind mechanische, chemische und thermische Verfahrenstechniken bekannt. Solche Verfahrenstechniken sind beispielsweise das Dekantieren, Filtrieren und Zentrifugieren, die Benützung von Chemikalien als Flock- und Fällmitteln, sowie das Kochen, Eindampfen, Verdampfen, Kondensieren und Trocknen. Bekannte Vorschläge verknüpfen und verketten diese Verfahrenstechniken oft in mehreren Stufen zu einem Verfahren.

So folgt beispielsweise, in einem bekannten Verfahren, der chargenweisen Behandlung des Schlammes mit Fällmitteln das Passieren vom Dekanter und Siebbandpresse, wonach das Filtrat entweder zum Klärbecken zurück-, oder nach Microfiltration und umgekehrter Osmose, zum Vorfluter, und der Filterkuchen zum Trockenofen geführt wird.

Die Nachteile dieses Verfahrens sind nebst hohen Investitionskosten die Betriebskosten, die durch den beträchtlichen Wartungsaufwand und den geringen thermischen Wirkungsgrad entstehen. Ein weiterer Nachteil ist die Belastung der Umwelt durch Chemikalien wie Fäll- und Flockmitteln sowie das Ammoniak, das ohne Anwendung der umgekehrten Osmose, mit dem Abwasser in die Kläranlage rezirkuliert wird. Ferner sind die Nachteile des Trockenofens wegen der Belastung der Abluft mit den Rauchgasen und mitgerissenen Staubteilen zu nennen.

Bei einem anderen Verfahren wird, zwecks Steigerung des Wärmeüberganges im Trocknungsprozess, dem Schlamm auf die Dauer der Behandlung Paraffin beigemischt. Die Nachteile dieses Verfahrens sind, nebst Problemen mit den Schlammgasen wie Ammoniak, die Paraffinverluste und die hohen Investitions und Betriebkosten.

Ein anderes bekanntes Verfahren ermöglicht den Verzicht auf Fäll- und Flockmittel, indem der Schlamm mit Hilfe eines beheizten Dünnschichtverdampfers unter Vakuum bis zur Trockensubstanz entwässert und die Brüdenkondensate als gekühltes Abwasser an die Kläranlage zurückgeführt werden.

Die Nachteile dieses Verfahrens sind, die ausserordentlich hohen Investitions-, Betriebs- und Unterhaltskosten. Die letztere entstehen durch Verschleiss, da die Sandpartickel des Schlammes zwischen dem rotierenden Abstreifer und dem Zylindermantel des Dünnschichtverdampfers wie Schleifmittel wirken.

Die vorliegende Erfindung stellt sich die Aufgabe der Schaffung eines kontinuierlichen und automatischen Verfahrens, für die Herstellung von handelsfähigem Trockendünger, ohne den Gebrauch von Chemikalien, ohne störende Emissionen, bei der Abgabe von sauberer, lauwarmen und somit vorfluterkonformem Abwasser, bei vertretbaren Investitionskosten und bestmöglicher Wirtschaftlichkeit im Betrieb.

Erfindungsgemäss wird diese Aufgabe gelöst durch die kennzeichnenden Merkmale des Anspruchs 1.

Anhand der beiliegenden schematischen Zeichnung wird die Erfindung beispielsweise wie folgt erläutert:

Vom Schlammsilo 1, der stellvertretend für verschiedene Schlammanfallstellen (z.B. Absetzbekken und Faulbehälter von Kläranlagen, Speicherbehälter von Biogasanlagen usw.) gilt, wird der Schlamm mit einen TS von 4 - 10 % , bei 15 bar Druck mit der Dosierpumpe 2 in den Erhitzer 3 gefördert. Im Erhitzer 3, der vom Blockheizkraftwerk 12 mit dem Motorkühlwasser 14 und den Auspuffgasen 13 beheizt ist, wird der Schlamm auf 180 - 200 °C erhitzt. Mit dieser Temperatur werden die Gase (wie Ammoniak und Kohlendioxyd) aus dem Schlamm getrieben. Nach Sammeln im Dom des Entgaserbehälters 4 werden diese Gase durch das Regelventil 15 abgelassen und im Blockheizkraftwerk 12 verbrannt oder durch Behandlung mit Schwefelsäure zum verwertbaren Ammoniumsulfid gewandelt. Der Schlamm wird durch den im Erhitzer 3 herrschenden Druck von 10 - 15 bar durch das Ablassventil 5 in den Eindampfer 6 gefördert. Im Eindampfer 6 wird der Schlamm auf etwa 18% TS bei ca.110 °C und 1,0 bar eingedickt. Die aus dem Eindampfer 6 entweichenden Brüden heizen den Vortrockner 8. Die aus dem Vortrockner 8 entweichenden Brüden dienen wiederum zur Heizung des Eindampfers 6 nach dem passieren der vom Blockheizkraftwerk 12 angetriebenen Brüdenkompressors 17.

Der Schlamm wird aus dem Eindampfer 6 mit der Pumpe 7 in den Vortrockner 8 gepumpt. Im Vortrockner 8 wird der Gehalt an Trockensubstanzen des Schlammes unter Luftausschluss bei ca. 100 °C auf ca. 65% TS erhöht. Aus dem Vortrockner 8 wird der noch feucht-pastöse Schlamm durch den Granulator 9 in Form von Granulat auf den Nachtrockner 10 ausgetragen. Die Trocknung des Schlammgranulates auf dem Nachtrockner 10 wird mit Warmluft vorgenommen. Die Warmluft wird durch die aus der Heizung des Eindampfers 6 und des Vortrockners 8 stammende ca. 95 - 100 °C warmen Brüdenkondensate geheizt. Durch die Erwärmung der Luft kühlen sich die Brüdenkondensate bis auf ca. 30 °C und können direkt in den Vorfluter 11 geleitet werden. Auf dem Nachtrockner 10 werden die Granulate bis auf 90 % TS getrocknet. Sie können nach passieren des Nachtrockners 10 in Handelspackungen abgefüllt oder in Silo 16 gelagert werden.

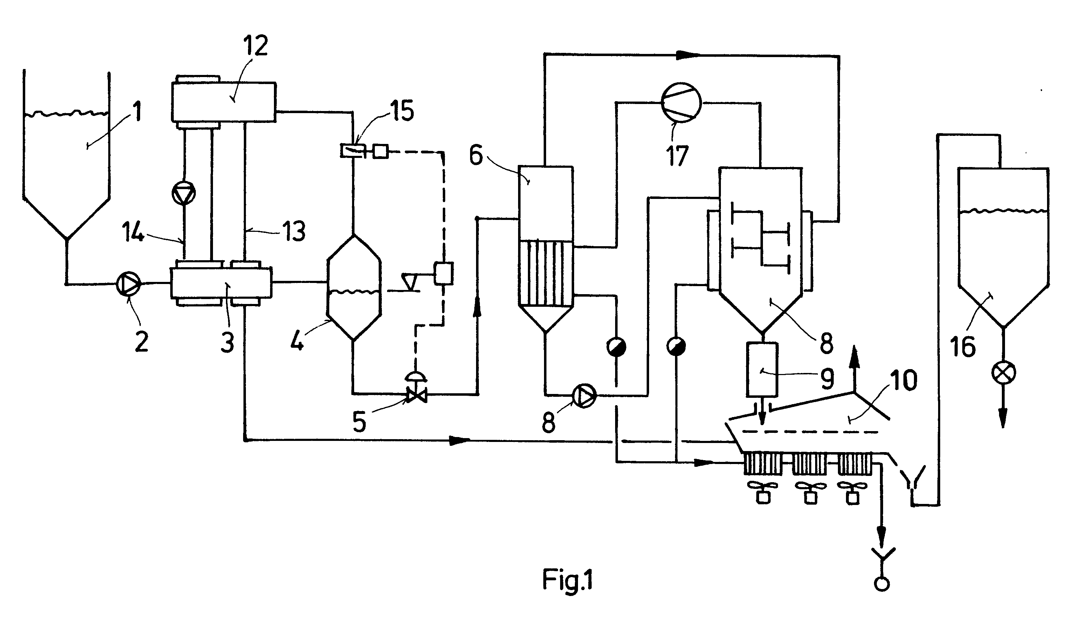

## Ansprüche

1. Verfahren zur Schlammentwässerung für das Eindicken und Trocknen von Schlämmen aus häuslichen, landwirtschaftlichen und industriellen Abwässern **dadurch gekennzeichnet**, dass zu Beginn der Schlamm unter Einwirkung von Druck und Hitze entgast und die Vortrocknung bis Nassaustrag (ca.65 %TS) vorgenommen wird.

2. Verfahren nach Patentanspruch 1 **dadurch gekennzeichnet**, dass für die Entgasung ein Behälter mit Gasdom verwendet und die Ausscheidung der Gase durch Regelventile vom Schlammniveau aus geregelt wird.

3. Verfahren nach Patentanspruch 1 **dadurch gekennzeichnet**, dass der Schlammaustrag aus dem Behälter für die Entgasung durch eine geregelte Pumpe oder durch ein Regelventil geschieht.

4. Verfahren nach Patentanspruch 3 **dadurch gekennzeichnet**, dass die Regelung der Pumpe oder des Regelventils in Funktion des Schlammniveaus vorgenommen wird.

5. Verfahren nach Patentanspruch 1 **dadurch gekennzeichnet**, dass für das Eindicken mindestens ein Fallstrom oder Umlaufverdampfer verwendet wird.

6. Verfahren nach Patentanspruch 1 **dadurch gekennzeichnet**, dass für die Trocknung mindestens ein Schaufeltrockner verwendet wird.

7. Verfahren nach Patentanspruch 4 **dadurch gekennzeichnet**, dass für die Trocknung zusätzlich Band- oder Fliessbett-Trockner verwendet werden.

8. Verfahren nach Patentanspruch 5 **dadurch gekennzeichnet**, dass die Band- und Fliessbett-Trockner luftbeheizt sind.

9. Verfahren nach Patentanspruch 1 **dadurch gekennzeichnet**, dass die ausgeschiedenen Gase verbrannt, oder durch chemikalien zu Dünger umgewandelt werden.

Fig.1

EP 0 397 953 A1

Europäisches
Patentamt

**EUROPÄISCHER RECHERCHENBERICHT**

Nummer der Anmeldung

EP 89 81 0653

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | GB-A-1 176 471 (NORSTEL & TEMPLEWOOD HAWKSLEY LTD) <br> * Seite 2, Zeilen 15-59 * <br> --- | 1 | C 02 F 11/18 <br> C 02 F 11/12 |
| X | GB-A-1 129 369 (WILLIAM E. FARRER LTD) <br> * Seite 2, Anspruch 1 * <br> --- | 1 | |
| X | DE-A-2 137 453 (VEREINIGTE KESSELWERKE) <br> * Seite 5, Absatz 4; Seite 6, Zeilen 6-29; Seite 4, Zeilen 11-18 * <br> --- | 1,2,9 | |
| X | GB-A-1 129 361 (WILLIAM E. FARRER LTD) <br> * Seite 2, Ansprüche 1-5 * <br> --- | 1-4 | |
| X | DE-C- 381 162 (K. IMHOFF et al.) <br> * Seite 1, Anspruch 1 * <br> --- | 1 | |
| A | GB-A- 806 699 (M.W. SIEKIERSKI) <br> * Seite 3, Anspruch 1; Seite 2, Zeilen 21-45 * <br> ----- | 1,5-8 | |

**RECHERCHIERTE SACHGEBIETE (Int. Cl.5)**

C 02 F

Der vorliegende Recherchenbericht wurde für alle Patentansprüche erstellt

| Recherchenort | Abschlußdatum der Recherche | Prüfer |
|---|---|---|
| DEN HAAG | 10-08-1990 | TEPLY J. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
............................................................
& : Mitglied der gleichen Patentfamilie, übereinstimmendes Dokument